# EUROPEAN PATENT APPLICATION

(11) **EP 1 954 070 A1**
(43) Date of publication of application: **06.08.2008**
(21) Application number: 06822893.1
(22) Date of filing: 02.11.2006
(51) Int. Cl.: H04Q 7/22, H04Q 7/36

(54) **DATA TRANSFER METHOD AND BASE STATION**

(30) Priority: 04.11.2005 JP 2005321639
(71) Applicant: NTT DoCoMo, Inc., Chiyoda-ku Tokyo 100-6150 (JP)
(72) Inventor: MOTEGI, Masayuki, NTT DoCoMo, Inc. Int. Property Department, Chiyoda-ku Tokyo 100-6150 (JP); KATO, Yasuhiro, NTT DoCoMo, Inc. Int. Property Department, Chiyoda-ku Tokyo 100-6150 (JP); HARADA, Atsushi, NTT DoCoMo, Inc. Int. Property Department, Chiyoda-ku Tokyo 100-6150 (JP); NAKAMURA, Takehiro, NTT DoCoMo, Inc. Int. Property Department, Chiyoda-ku Tokyo 100-6150 (JP)
(74) Representative: HOFFMANN EITLE
(86) International application number: PCT/JP2006/321975
(87) International publication number: WO 2007/052747

(57) **Abstract**

The present invention relates to a data transfer method which transfers user data of a mobile station, which is stored in a buffer of the handover source base station, from a handover source base station to a handover target base station, when the mobile station performs a handover. The data transfer method according to the present invention includes: determining, at the handover source base station, a transfer order of the user data; and transferring, at the handover source base station, the user data to the handover target base station based on the transfer order.

## Description

### Technical Field

The present invention relates to techniques for transferring data between base stations. In particular, the present invention relates to a data transfer method and a base station, which transfers the data between base stations when a mobile station performs a handover.

### Background Art

In an Evolved Universal Terrestrial Radio Access Network (E-UTRAN) system of a next generation radio access network, which has been discussed in the third Generation Partnership Project (3GPP), it is assumed to apply a hard handover as a handover between base stations.

In the hard handover, a mobile station switches a radio link from a hard handover source base station to a hard handover target base station.

In such hard handover, a complexity of a system can be eliminated. Thus, the hard handover is particularly effective in the E-UTRAN system in which the handover between base stations is performed through an IP-based core network.

In such handover, however, the mobile station cannot receive, from the handover target base station, user data stored in a buffer for the mobile station in the handover source base station (for example, downlink user data yet to be sent to the mobile station, downlink user data being retransmitted, and the like).

Accordingly, in such hard handover, the hard handover source base station is required to transfer the user data, which is stored in the buffer for the mobile station, to the hard handover target base station.

For example, "Fast Handover for MIPv6 (FMIP)" is defined in RFC4068 of IETF (see, for example, Non-patent Document 1), as a method for transferring the user data in the hard handover.

However, when a plurality of the mobile stations perform a process of the hard handover, a large volume of the user data, which is transferred from the hard handover source base station to the hard handover target base station, is communicated on a transmission path, in addition to the user data between the base station and the plurality of the mobile stations. Thus, a congestion of the transmission path may occur.

In such a case, due to the congestion of the transmission path, the user data transferred from the hard handover source base station to the hard handover target base station could be lost.

The lost user data is retransmitted by a retransmission control between the base stations. However, retransmitting the lost user data takes longer time since the lost user data is retransmitted in an upper layer.

As a result, transmitting the user data from the hard handover source base station to the hard handover target base station takes longer time. Accordingly, a user throughput could largely deteriorate.

Non-patent Document 1: IETF RFC4068

### Disclosure of the Invention

In view of the above problem, the present invention has an object of providing a data transfer method and a base station, which can effectively transfer user data of the mobile station to a handover target base station without losing any data, when the mobile station performs a handover.

A first aspect of the present invention is summarized as a data transfer method which transfers user data of a mobile station, which is stored in a buffer of the handover source base station, from a handover source base station to a handover target base station, when the mobile station performs a handover, including: determining, at the handover source base station, a transfer order of the user data; and transferring, at the handover source base station, the user data to the handover target base station based on the transfer order.

In the first aspect of the present invention, in the determination of the transfer order, the transfer order may be determined according to a type of the user data.

In the first aspect of the present invention, the buffer may be provided with each of the mobile station, and in the determination of the transfer order, the transfer order may be determined according to a storage state of the user data in the buffer provided with each of the mobile station.

In the first aspect of the present invention, in the determination of the transfer order, the transfer order may be determined based on a moving speed of the mobile station.

A second aspect of the present invention is summarized as a base station which transfers user data of a mobile station to a handover target base station of the mobile station, including: a transfer order determination unit configured to determine a transfer order of the user data; and a transfer unit configured to transfer the user data to the handover target base station based on the transfer order.

In the second aspect of the present invention, the transfer order determination unit may be configured to determine the transfer order according to a type of the user data.

In the second aspect of the present invention, the buffer may be provided with each of the mobile station, and the transfer order determination unit may be configured to determine the transfer order according to a storage state of the user data in the buffer provided with each of the mobile station.

In the second aspect of the present invention, the transfer order determination unit may be configured to determine the transfer order based on a moving speed of the mobile station.

### Brief Description of the Drawings

[Fig. 1] Fig. 1 is a diagram showing a configuration example of a mobile communication system according to a first embodiment of the present invention.
[Fig. 2] Fig. 2 is a diagram showing an example of a protocol configuration of the mobile communication system according to the first embodiment of the present invention.
[Fig. 3] Fig. 3 is a diagram showing a configuration example of a base station according to the first embodiment of the present invention.
[Fig. 4] Fig, 4 is a diagram for illustrating a determination of a transfer order by the base station according to the first embodiment of the present invention.
[Fig. 5] Fig. 5 is a sequential diagram showing an operational example of a handover processing of the mobile communication system according to the first embodiment of the present invention.
[Fig. 6] Fig. 6 is a flowchart showing an operational example of the base station in the handover processing according to the first embodiment of the present invention.
[Fig. 7] Fig. 7 is a flowchart showing an operational example illustrating a determination of the transfer order by the base station according to the first embodiment of the present invention.

### Best Mode for Carrying out the Invention

### (Mobile communication system according to a first embodiment of the present invention)

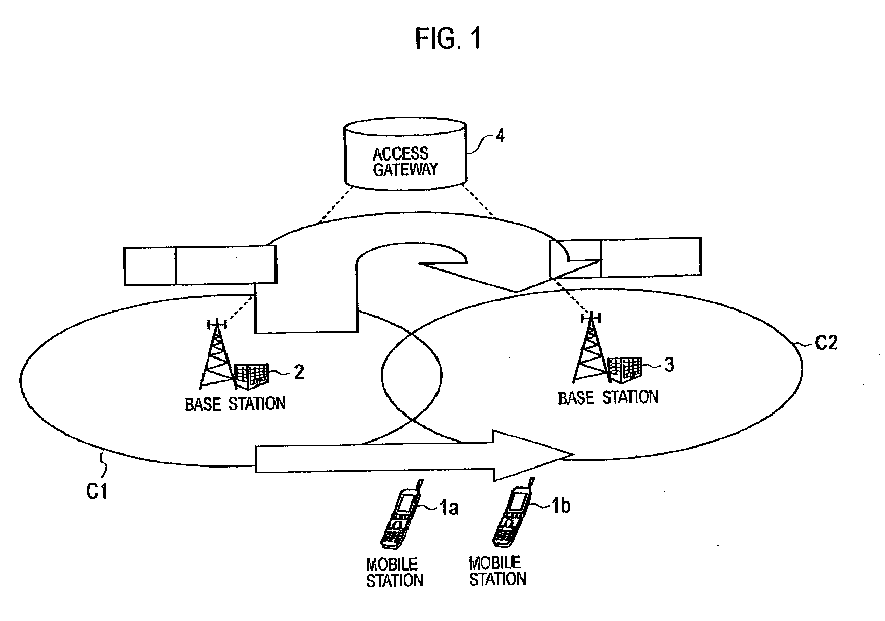

By referring to Figs. 1 to 4, a configuration of a mobile communication system according to a first embodiment of the present invention will be described. In addition, the mobile communication system according to the present embodiment is also applicable to "High Speed Downlink Packet Access (HSDPA)", which is a high-speed packet communication system.

As shown in Fig. 1, the mobile communication system according to the present embodiment includes at least one mobile station 1 (1a, 1b, ...), a plurality of base stations 2 and 3, and an access gateway (AG) 4. The base stations 2 and 3 respectively configure cells C1 and C2. Note that each of the base station may include multiple directional antennas, and multiple sectors may be configured in each cell.

In the following description, an example is described in which the mobile station 1 moves from a cell C1 side of the base station 2 to a cell C2 side of the base station 3, and the base station 2 is to be a handover source base station and the base station 3 is to be a handover target base station.

In the present description, "handover" refers to "hard handover". In such a hard handover, when the mobile station 1 moves from the cell C1 to the cell C2, the mobile station 1 switches a radio link from the handover source base station 2 to the handover target base station 3. In such a hard handover, the mobile station 1 transmits and receives the user data constantly with only one base station.

A transmission path on which the user data can be transferred is provided between the handover source base station 2 and the handover target base station 3. Such a transmission path may be wired or wireless. In addition, the transmission path may be formed so that the access gateway 4, a router, a switch, and the like would be connected therewith.

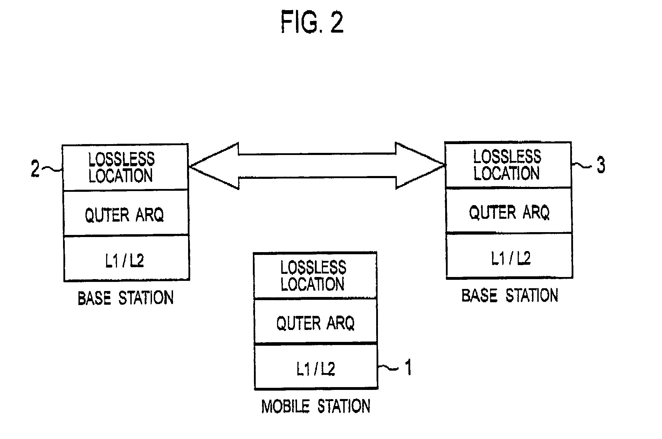

Fig. 2 is a diagram showing a protocol (user plane: U plane) configuration for transmitting and receiving the user data in the mobile communication system according to the present embodiment.

As shown in Fig. 2, the base stations 2 and 3 and the mobile station 1 may be configured to include, as a sub-layer of a layer 2, an Outer ARQ function and a Lossless Relocation function.

The outer ARQ function is a retransmission control function which compensates a loss of the user data, the loss which cannot compensated by the Hybrid Automatic Repeat reQuest (HARQ) retransmission control of the sub-layer of the layer 2.

Note that a buffer which is provided with a user data storage unit 22 (to be described later) of the handover source base station 2 may be a Service Data Unit (SDU) buffer in the Outer ARQ function.

Here, the SDU is referred to be a unit of the user data in the Outer ARQ function.

Furthermore, when the mobile station 1 performs the handover, the SDU stored In the SDU buffer may be transferred to the handover target base station 3 by the Lossless Relocation function of the handover source base station 2.

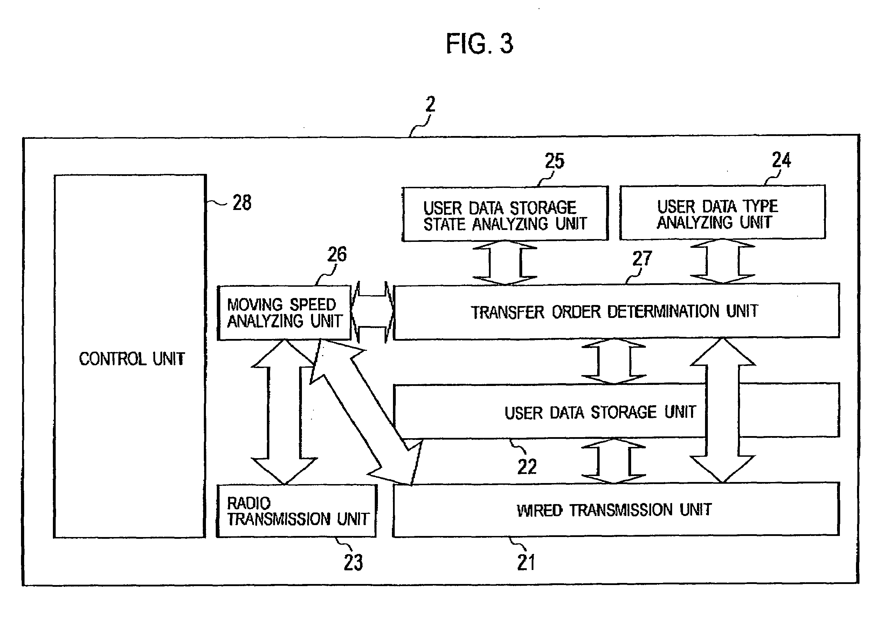

Fig. 3 is a diagram showing a configuration of the handover source base station 2 in the mobile communication system according to the present embodiment.

Note that such a configuration is applicable to all of the handover source base stations, and it should be noted that when the base station 3 is the handover source base station, the base station 3 may have a similar configuration.

The handover source base station 2 is provided with a wired transmission unit 21, a user data storage unit 22, a radio transmission unit 23, a user data type analyzing unit 24, a user data storage state analyzing unit 25, a moving speed analyzing unit 26, a transfer order determination unit 27, and a control unit 28.

Note that the base station 2 is described here as the configuration in which all of the user data type analyzing unit 24, the user data storage state analyzing unit 25, and the moving speed analyzing unit 26 are provided. However, the base station 2 may take any configuration as long as It includes at least one of such components.

The wired transmission unit 21 is configured to transmit and receive the user data to and from the access gateway 4 or the handover target base station 3 through a network.

Specifically, the wired transmission unit 21 is configured to receive downlink user data through the access gateway 4, and to store the received data in the user data storage unit 22.

In addition, when the mobile state 1 performs the handover, the wired transmission unit 21 is configured to transfer the user data of the mobile station 1, which is stored in the buffer of the user data storage unit 22 (to be described later), to the handover target base station 3, based on a transfer order determined by the transfer order determination unit 27.

In addition, the wired transmission unit 21 may be configured to receive information for measuring a moving speed of the mobile station 1.

The user data storage unit 22 is provided with a buffer which stores the user data of the mobile station 1.

Specifically, the user data storage unit 22 is configured to store in the buffer, such as user data for which a transmission acknowledged from the mobile station has not received, user data which is being acknowledged, user data yet to be transmitted to the mobile station 1 after received from the access gateway 4, or the like.

Further, the user data storage unit 22 may be provided with a buffer for each of the mobile station 1, respectively, so as to store the user data in the buffer for each of the mobile station 1, respectively.

Moreover, the user data storage unit 22 may be provided with a buffer for each of the mobile station 1, respectively, and the buffer for each of the mobile station 1 is provided for each content of the user data, respectively. For example, the user data storage unit 22 may be provided with a buffer for conversation data for the mobile station 1a, a buffer for streaming data for the mobile station 1 a, ..., a buffer for conversation data for the mobile station 1 b, and the like, and stores the user data in each of the buffer, respectively.

Furthermore, the user data storage unit 22 may be configured to delete, from the buffer, the user data which is acknowledged by the retransmission control between the base station 2 and the mobile station 1.

The radio transmission unit 23 is configured to transmit and receive the user data to and from the mobile station 1 through a radio network.

Specifically, the radio transmission unit 23 is configured to transmit the downlink user data stored in the user data storage unit 22, to the mobile station 1.

Moreover, the radio transmission unit 23 may be configured to receive information for measuring a moving speed of the mobile station 1.

The user data type analyzing unit 24 is configured to analyze a priority order of the user data, based on a type of the user data stored in the user data storage unit 22.

Here, the type of the user data is referred to as, for example, a type based on a content of the user data (conversation data, streaming data, interactive data, background data, and the like), a type based on a priority identifier added to the user data such as DiffServ, a type based on a direction (uplink or downlink) of the user data, a type based on a user (such as a user of the mobile station 1a, a user of the mobile station 1 b, ...), and the like.

In addition, the user data type analyzing unit 24 is configured to notify, to the transfer order determination unit 27, the priority order of the user data analyzed based on the type of user data.

For example, when the user data type analyzing unit 24 analyzes the priority order of the user data based on the content of the user data, the user data type analyzing unit 24 may notify, to the transfer order determination unit 27, the priority order; the conversation data > the streaming data > the interactive data > the background data.

Further, when the user data type analyzing unit 24 analyzes the priority order of the user data based on the priority identifier added to the user data such as DiffServ, the priority order of the user data may be notified to the transfer order determination unit 27 by analyzing the priority identifier.

The user data storage state analyzing unit 25 is configured to analyze a storage state of the user data, which is stored In the buffer for each of the mobile station 1 in the user data storage unit 22.

In addition, the user data storage state analyzing unit 25 is configured to notify, to the transfer order determination unit 27, the analyzed storage state of the user data of each of the mobile station 1.

The moving speed analyzing unit 26 is configured to analyze the moving speed of each of the mobile station 1,

Specifically, the moving speed analyzing unit 26 analyzes the moving speed of each of the mobile station 1, based on the information for measuring the moving speed, the information notified by the wired transmission unit 21 and the radio transmission unit 23.

Here, the information for measuring the moving speed is referred to as, for example, the number of the handover per unit time of each of the mobile station 1, a handover history (such as a time) of each of the mobile station 1, the handover history recorded in each of the mobile station 1, a handover history (such as a time) of each of the mobile station, the handover history notified from an other base station through the network, a radio signal from each of the mobile station 1, and the like.

Furthermore, the moving speed analyzing unit 26 is configured to notify, to the transfer order determination unit 27, the analyzed moving speed of each of the mobile station 1.

The transfer order determination unit 27 is configured to determine a transfer order of the user data.

Specifically, the transfer order determination unit 27 is configured to determine the transfer order of the user data, based on the priority order of the user data, which is notified from the user data type analyzing unit 24, the storage state of the user data in each of the mobile station 1, which is notified from the user data storage state analyzing unit 25, or the moving speed of each of the mobile station 1, which is notified from the moving speed analyzing unit 26.

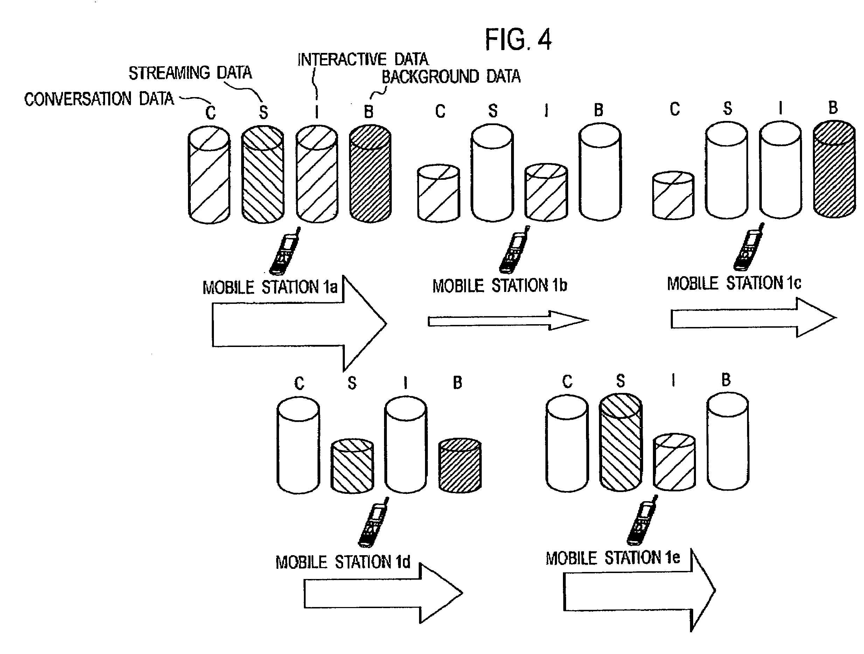

As an example, Fig. 4 shows the priority order of the user data, the storage state of the user data of the mobile stations 1a to 1e, and the moving speed of the mobile stations 1 a to 1e, when the mobile stations 1 a to 1 e perform the handover,

In Fig. 4, when the transfer order determination unit 27 determines the transfer order of the user data based on the priority order of the user data (for example; the conversation data (C) > the streaming data (5) > the interactive data (1) > the background data (B)), the transfer order determination unit 27 determines so that the transfer order of the conversation data (C) of the mobile station 1a, the mobile station 1b, and the mobile station 1c, which have a high priority order, would be preferentially transferred.

In Fig. 4, when the transfer order determination unit 27 determines the transfer order of the user data based on the storage state of the user data of the mobile stations 1a to 1e, the transfer order determination unit 27 determines the transfer order so that the user data of the mobile station 1a, which has the largest volume of the stored user data, would be preferentially transferred.

In Fig. 4, when the transfer order determination unit 27 determines the transfer order of the user data based the moving speed of the mobile stations 1a to 1e, the transfer order determination unit 27 determines the transfer order so that the user data of the mobile stations 1a and 1c, each of which has a fast moving speed (in Fig. 4, thicker arrows), would be preferentially transferred.

Note that the transfer order determination unit 27 may be configured to determine the transfer order of the user data based on the priority order of the user data notified from the user data type analyzing unit 24, the storage state of the user data of each of the mobile station 1 notified from the user data storage state analyzing unit 25, and the moving speed of each of the mobile station 1 notified from the moving speed analyzing unit 26.

In addition, the transfer order determination unit 27 may be configured to calculate a transfer order coefficient based on the priority order of the user data notified from the user data type analyzing unit 24, the storage state of the user data of each of the mobile station 1 notified from the user data storage state analyzing unit 25, and the moving speed of each of the mobile station 1 notified from the moving speed analyzing unit 26, and to determine the transfer order of the user data based on the calculated transfer order coefficient.

Note that the transfer order determination unit 27 may be configured to determine the transfer order based on an Index other than the foregoing. For example, a continuous communication time of each of the mobile station 1, a physical distance to the handover target base station 3 from each of the mobile station 1, or the like can be used as the index.

Furthermore, when a plurality of the mobile stations 1 have a same priority order; such as when the storage state of the user data of the plurality of the mobile stations 1 are same, or when the moving speed of the plurality of the mobile stations 1 are same, the transfer order determination unit 27 may determine the transfer order by a well-known approach, such as a round robin or "HO initiation (an order of the resource allocation from the handover target base station)".

As will be described later, the control unit 28 is configured to perform a control with regard to the handover of each of the mobile station 1, based on a measurement report from each of the mobile station 1.

### (Operations of the mobile communication system according to the first embodiment of the present Invention)

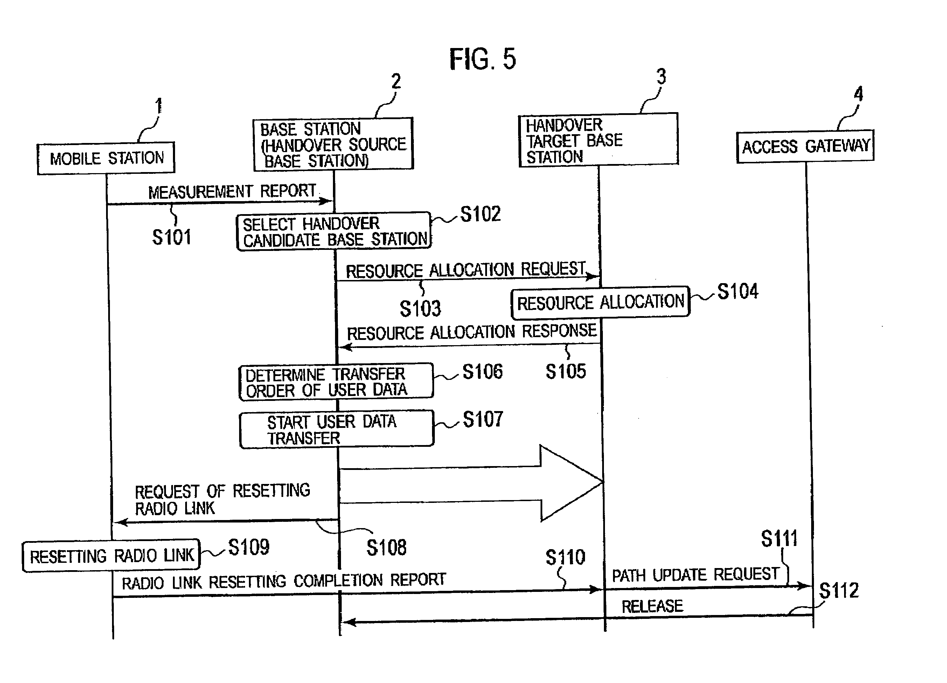

By referring to Figs. 5 to 7, operations of the mobile communication system according to the present embodiment will be described.

Firstly, by referring to Fig. 5, a sequence of a handover processing performed when a mobile station 1 performs a handover will be described.

As shown in Fig. 5, in step S101, the mobile station 1 transmits, to a handover source base station 2 as a measurement report, information of a handover candidate base station (cell) so that the handover source base station 2 can properly select a handover target base station (cell).

In step S102, based on the measurement report from the mobile station 1, the handover source base station 2 determines whether the handover of the mobile station 1 is required. When the handover of the mobile station 1 is required, the handover source base station 2 selects a handover candidate base station 3 as the handover candidate base station which is appropriate to transmit a resource allocation request from the handover source base station 2, based on the measurement report received in step S101.

In step S103, the handover source base station 2 transmits the resource allocation request to the handover candidate base station 3 selected in step S102,

The above-described resource allocation request may include QoS information with regards to the mobile station 1. Note that such resource allocation request may be "UE context" of a control plane (C plane), or the like.

In step S104, the handover candidate base station 3 performs a resource allocation and a resource reservation for the mobile station 1, based on the QoS information with regards to the mobile station 1.

In step S105, the handover candidate base station 3 transmits a resource allocation response to the handover source base station 2.

Specifically, when the resource reservation for the mobile station 1 is successfully made, the handover candidate base station 3 notifies that a preparation for the handover of the mobile station 1 has been completed, to the handover source base station 2 by the resource allocation response. In such a case, the handover source base station 2 determines the handover candidate base station 3, as the handover target base station.

On the other hand, when the handover candidate base station 3 fails to reserve a resource for the mobile station 1, the handover candidate base station 3 notifies that the resource for the mobile station 1 cannot be reserved, to the handover source base station 2 by the resource allocation response. In such a case, the present operation returns to step S102 and the handover source base station 2 selects an other handover candidate base station based on the measurement report, and performs the above-described processing.

In step S106, the handover source base station 2 determines a transfer order of user data of the mobile station 1, which is stored in the buffer of the handover source base station 2, according to a processing of determining a user data transfer order to be described later.

In step S107, based on the transfer order determined in step S106, the handover base station 2 transmits the user data of the mobile station 1, which is stored in the buffer of the handover source base station 2, to the handover target base station 3.

In step S108, the handover source base station 2 transmits, to the mobile station 1, a request of resetting a radio link.

The request of resetting the radio link includes information necessary for establishing a radio link between the mobile station 1 and the handover target base station 3 (for example, a spread cord or the like).

In step 109, the mobile station 1 performs the handover by resetting the radio link.

Specifically, the mobile station 1 switches the radio link from the handover source base station 2 to the handover target base station 3.

In step S110, the mobile station 1 transmits a radio link resetting completion report to the handover target base station 3 with which the radio link is established.

I n step S111, the handover target base station 3 transmits a path update request to the access gateway 4. The access gateway 4 performs a path update, and updates a path of a destination address from the handover source base station 2 to the handover target base station 3,

In step S112, the access gateway 4 releases a signaling between the access gateway and the handover source base station 2.

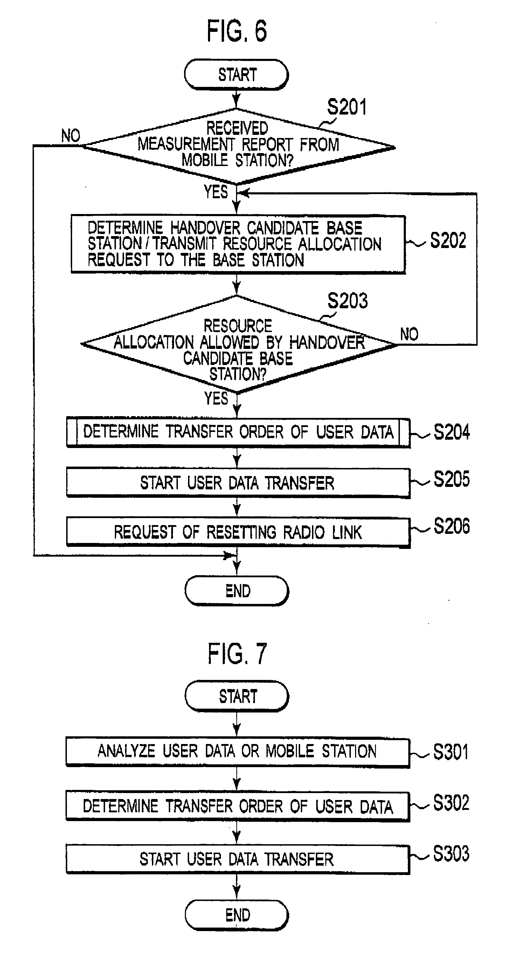

Secondly, by referring to Fig. 6, a flow of the handover source base station 2 in the above-described handover processing will be described. Fig. 6 corresponds to the sequence indicated by Fig. 5, and thus is briefly described.

As shown in Fig. 6, when the handover source base station 2 receives the measurement report from the mobile station 1 (steps S201 and S101), the handover source base station 2 selects the handover candidate base station 3 and transmits the resource allocation request (steps S202, and S102 and S103). When the handover source base station 2 receives the resource allocation response, which allows a resource allocation, from the handover candidate base station 3 (steps S203 and S105), the handover source base station 2 determines the transfer order of the user data (steps S204 and 106). Then, the handover source base station 2 transfers the user data based on the determined transfer order of the user data (steps S205 and S107), and transmits, to the mobile station 1, the request of resetting the radio link (steps S206 and S108).

Thirdly, by referring to Fig. 7, a flow that the handover source base station 2 determines the transfer order of the user data in the above-described handover processing will be described. Fig. 7 corresponds to step S106 in Fig. 5 and step S204 in Fig. 7.

As shown in Fig. 7, in step S301, the handover source base station 2 analyzes the user data or the mobile station 1. Specifically, this processing is performed by the user data type analyzing unit 24 and/or the user data storage state analyzing unit 25, and/or the moving speed analyzing unit 26, which are shown in Fig. 3.

In step S302, the handover source base station 2 determines the transfer order of the user data. Specifically, this processing is performed by the transfer order determination unit 27, which is shown in Fig. 3.

In step S303, the handover source base station 2 transfers the user data based on the transfer order determined in step S302. Specifically, this processing is performed by the wired transmission unit 21, which is shown in Fig. 3.

### (Operations and effects of the mobile communication system according to the first embodiment of the present invention)

The mobile communication system according to the present embodiment makes it possible to determine the transfer order of the user data, when a mobile station performs a handover. Therefore, it is possible to effectively transfer the user data of the mobile station to the handover target base station without losing any data.

In addition, the mobile communication system according to the present embodiment makes it possible to determine the transfer order so that the user data having a high priority order to be preferentially transferred. Therefore, a radio resource of the handover target base station can be effectively utilized.

### (Other Embodiments)

As described above, the present invention is described by referring to the first embodiment. However, it should be understood that the description and drawings, which constitute one part of this disclosure, are not intended to limit the present invention. Various alternative embodiments, modifications, and operational techniques will be clear for those in the art from the present disclosure.

As described above, the present invention obviously includes various embodiments that are not described here, Accordingly, the technical scope of the present invention is only defined by the specific matters of the invention according to the scope of claims which are appropriate based on the above description.

### Industrial Applicability

The present invention can provide a data transfer method and a base station, which can effectively transfer user data of the mobile station to a handover target base station without losing any data, when the mobile station performs a handover.

## Claims

1. A data transfer method which transfers user data of a mobile station, which is stored in a buffer of the handover source base station, from a handover source base station to a handover target base station, when the mobile station performs a handover, the method comprising;
determining, at the handover source base station, a transfer order of the user data; and
transferring, at the handover source base station, the user data to the handover target base station based on the transfer order.

2. The data transfer method according to claim 1, wherein in the determination of the transfer order, the transfer order is determined according to a type of the user data.

3. The data transfer method according to any of claims 1 and 2, wherein
the buffer is provided with each of the mobile station, and
in the determination of the transfer order, the transfer order is determined according to a storage state of the user data in the buffer provided with each of the mobile station.

4. The data transfer method according to any of claims 1 to 3, wherein in the determination of the transfer order, the transfer order is determined based on a moving speed of the mobile station.

5. A base station which transfers user data of a mobile station to a handover target base station of the mobile station, comprising:
a transfer order determination unit configured to determine a transfer order of the user data; and
a transfer unit configured to transfer the user data to the handover target base station based on the transfer order.

6. The base station according to claim 5, wherein the transfer order determination unit is configured to determine the transfer order according to a type of the user data.

7. The base station according to claims 5 or 6, wherein
the buffer is provided with each of the mobile station, and
the transfer order determination unit is configured to determine the transfer order according to a storage state of the user data in the buffer provided with each of the mobile station.

8. The base station according to any of claims 5 to 7, wherein the transfer order determination unit is configured to determine the transfer order based on a moving speed of the mobile station.
